# FASCICULE DE BREVET EUROPEEN

(11) **EP 0 736 941 B1**
(45) Date de publication et mention de la délivrance du brevet: **02.06.1999**
(21) Numéro de dépôt: 96410027.5
(22) Date de dépôt: 19.03.1996
(51) Int. Cl.: H02G 3/14

(54) **Boîtier pour appareillage electrique**
Gehäuse für elektrisches Gerät
Box for electrical apparatus

(30) Priorité: 07.04.1995 FR 9504425
(43) Date de publication de la demande: 09.10.1996
(73) Titulaire: SCHNEIDER ELECTRIC SA, 92100 Boulogne Billancourt (FR)
(72) Inventeur: Demmerle, Hervé, 38050 Grenoble Cedex 09 (FR)
(74) Mandataire: Hecké, Gérard

(56) Documents cités:
- CH-A- 470 598
- NL-A- 6 600 671
- US-A- 3 792 414

## Description

La présente invention concerne un boîtier pour appareillage électrique et notamment pour une boîte de dérivation étanche, ce boîtier comportant un corps et un couvercle adaptable sur ce corps par clipsage, emboîtement ou similaire.

Il existe de nombreux boîtiers étanches composés d'un corps destiné à contenir un appareillage électrique et d'un couvercle qui s'emboîte, se verrouille ou se clipse sur ce corps. L'utilisateur final trouve ces produits conditionnés de deux façons différentes. Soit le couvercle et le corps du boîtier ne sont pas assemblés, soit ils se présentent assemblés. Dans le premier cas, l'utilisateur peut installer le corps du boîtier, monter son équipement électrique à l'intérieur et finalement adapter le couvercle sur le corps par clipsage. Il risque cependant de perdre le couvercle, notamment si le montage n'est pas fait directement et si le boîtier, qui se présente en deux éléments séparés, est stocké pendant un temps plus ou moins long. Dans le second cas, l'utilisateur est obligé de déclipser le couvercle à l'aide d'un outil. En effet, la norme en vigueur impose une construction qui empêche la désolidarisation du couvercle et du corps à l'aide des seules mains. Cette opération génère un risque de marquage sous forme de rayure qui dégrade l'aspect esthétique du boîtier. Ce risque de marquage est essentiellement dû à l'utilisation d'une matière synthétique de la famille des polyoléfines qui se substitue de plus en plus aux autres matériaux plus durs qui étaient couramment utilisés jusqu'à présent en raison de leur faible teneur en halogène.

Le document US 3792414 décrit un boîtier pour appareillage électrique, dans lequel le couvercle vient de moulage avec le boîtier en une seule pièce. La languette moulée de liaison entre le boîtier et le couvercle comporte une charnière pliable, formée par une section rétrécie, et autorisant la fermeture du couvercle.

La présente invention se propose de pallier les inconvénients mentionnés ci-dessus en réalisant un boîtier dont le couvercle ne peut plus être égaré et pour lequel on supprime tout risque de dégradation esthétique par marquage au moyen d'un outil nécessaire pour désolidariser le corps et le couvercle lorsqu'ils ont été assemblés en usine. Le boîtier selon l'invention est caractérisé en ce que le lien souple est constitué par un feuillard en matière synthétique dont une extrémité est rendue solidaire du corps et l'autre extrémité est rendue solidaire du couvercle, et que le corps et le couvercle sont équipés de moyens d'assemblage complémentaires s'étendant le long d'une partie de la périphérie pour permettre un prémontage du couvercle en deux ou trois zones lors du conditionnement en usine, le démontage manuel du couvercle par l'utilisateur final pouvant s'effectuer par la suite sans outil.

Selon un mode de réalisation préféré, le feuillard est fixé au corps et au couvercle par soudure à ultra-sons ou à haute fréquence.

Pour pouvoir être conditionnés de telle manière que le corps et le couvercle soient assemblés, ces deux éléments sont de préférence équipés de moyens permettant de les rendre solidaires en deux ou trois points répartis à la périphérie du boîtier.

L'invention sera mieux comprise en référence à la description et aux dessins illustrant de façon non limitative une forme de réalisation préférée et une variante du boîtier selon l'invention, dans lesquels :
- la figure 1 représente une vue en coupe d'une forme de réalisation préférée du boîtier selon l'invention, le corps et le couvercle étant désolidarisés;
- la figure 2 représente une vue de dessus illustrant l'intérieur du corps et le dessous du couvercle du boîtier de la figure 1,
- la figure 3 représente une vue similaire à celle de la figure 1, mais où le lien souple est soudé par ses extrémités respectivement au corps et au couvercle, et
- la figure 4 représente une vue similaire à celle de la figure 2, mais correspondant à une fixation du lien souple par soudure.

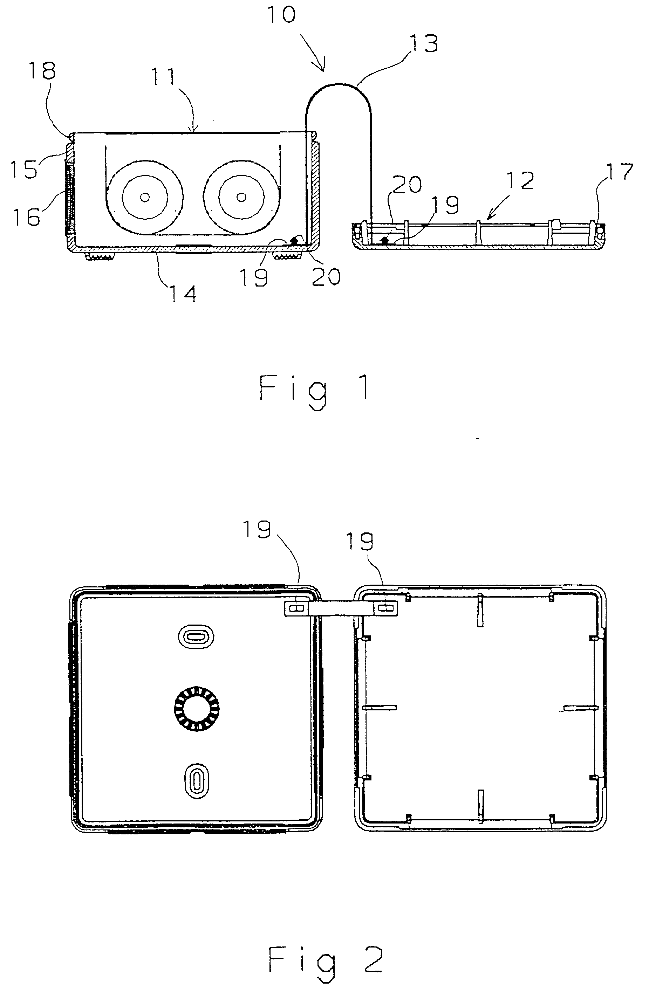

En référence aux figures 1 et 2, le boîtier 10 se compose d'un corps 11 et d'un couvercle 12 reliés par un lien souple 13. Le corps est constitué d'une façon tout à fait classique d'une boîte parallélépipédique ayant un fond 14 et des parois latérales 15 dans lesquelles sont ménagées des ouvertures pour le passage de fils électriques, ces ouvertures pouvant être obturées par des bouchons 16 qui peuvent être rapportés ou moulés d'une pièce avec les parois.

Le couvercle 12 est également une pièce moulée conçue pour être adaptée par clipsage sur le corps. A cet effet, il comporte une gorge périphérique 17 agencée pour coopérer avec un bourrelet périphérique 18 du corps pour assurer une liaison étanche du couvercle et du corps. Cette liaison est telle que le retrait du couvercle ne peut se faire qu'avec un outil et non avec les seules mains, comme l'exigent les normes de fabrication de ce type de boîtiers étanches.

Le lien souple 13 est de préférence constitué par un feuillard ou une bride en matière synthétique. Son épaisseur est suffisamment faible pour qu'il conserve la souplesse nécessaire pour permettre la mise en place du couvercle sur le corps, tout en assurant une liaison permanente entre le couvercle et le corps, rendant le couvercle imperdable. Selon le mode de réalisation représenté, les extrémités du lien 13 comportent chacune une ouverture 19 destinée à recevoir deux tétons d'encliquetage 20 respectivement disposés au fond du corps et au fond du couvercle. Ces tétons peuvent assurer directement la fixation des extrémités du lien souple à la manière de boutons engagés dans des boutonnières. Ces tétons et ces ouvertures constituent des éléments de forme complémentaire permettant d'assurer la fixation du lien souple.

La liaison peut également se faire par bouterollage à chaud, la tête des tétons étant aplatie et agissant à la manière d'un rivet.

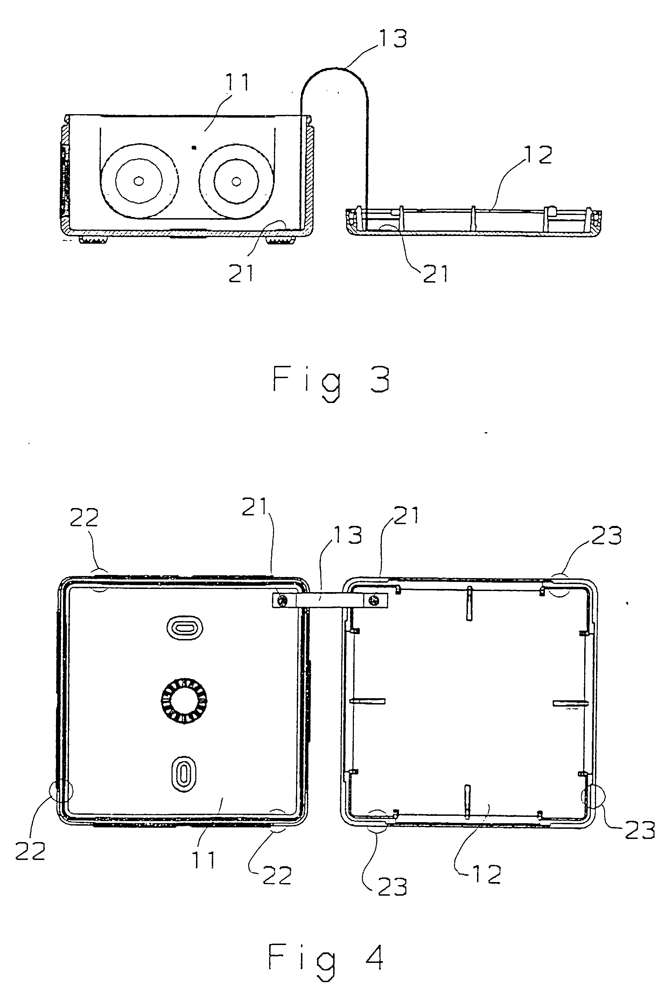

Les figures 3 et 4 représentent une variante selon laquelle les extrémités du lien souple 13 sont soudées en des points 21 au fond du corps 11 et du couvercle 12. Cette soudure est de préférence du type par ultra-sons ou par haute fréquence. Ce mode de réalisation est efficace, rapide et permet une fabrication automatisée.

Pour que le boîtier puisse être conditionné de façon prémontée, c'est-à-dire le couvercle et le corps assemblés sans que l'utilisateur final soit obligé de recourir à un outil pour désassembler ces deux pièces, le couvercle et le corps sont équipés de moyens d'assemblage complémentaires 22, 23 répartis sur trois zones espacées entre elles de la périphérie du boîtier. Ces moyens d'assemblage sont par exemple une gorge et un bourrelet identiques à la gorge 17 et au bourrelet 18 définis en référence aux figures 1 et 2, mais qui ne s'étendent que le long d'une faible partie de la périphérie. L'avantage de cette réalisation est qu'elle permet un désassemblage rapide et entièrement manuel du couvercle. D'autres formes de réalisation peuvent bien entendu être envisagées. Le couvercle peut présenter une protubérance ou un téton avec une tête élargie en trois points de sa périphérie. Cette protubérance ou ces tétons correspondent alors à des réceptacles appropriés ménagés dans la partie supérieure des parois latérales du corps.

## Revendications

1. Boîtier pour une boîte de dérivation étanche, comportant un corps et un couvercle constitués par deux éléments distincts adaptables par clipsage, et un lien souple (13) reliant le corps (11) au couvercle (12) de manière permanente, caractérisé en ce que le lien souple (13) est constitué par un feuillard en matière synthétique dont une extrémité est rendue solidaire du corps (11) et l'autre extrémité est rendue solidaire du couvercle (12), et que le corps (11) et le couvercle (12) sont équipés de moyens d'assemblage complémentaires (22, 23) s'étendant le long d'une partie de la périphérie pour permettre un prémontage du couvercle (12) en deux ou trois zones lors du conditionnement en usine, le démontage manuel du couvercle (12) par l'utilisateur final pouvant s'effectuer par la suite sans outil.

2. Boîtier selon la revendication 1, caractérisé en ce que le feuillard est fixé au corps et au couvercle par soudure par ultra-sons.

3. Boîtier selon la revendication 1, caractérisé en ce que le feuillard est fixé au corps et au couvercle par soudure par haute fréquence.

4. Boîtier selon la revendication 1, caractérisé en ce que le feuillard est fixé au corps et au couvercle par encliquetage d'éléments de forme complémentaire équipant respectivement les extrémités du feuillard et des zones adéquates du couvercle (12) et du corps (11).

5. Boîtier selon la revendication 1, caractérisé en ce que le feuillard est fixé au corps (11) et au couvercle (12) par bouterollage à chaud.

## Patentansprüche

1. Gehäuse für eine dicht verschlossene Abzweigdose mit einen Unterteil und einem Deckel, die als unterschiedliche, aufeinander aufschnappbare Teile ausgebildet sind, sowie einer den Unterteil (11) dauerhaft mit dem Deckel (12) verbindenden biegsamen Verbindung (13), dadurch gekennzeichnet, daß die biegsame Verbindung (13) aus einem Kunststoffband besteht, dessen eines Ende mit dem Unterteil (11) und dessen anderes Ende mit dem Deckel (12) verbunden wird, und daß der Unterteil (11) und der Deckel (12) zusätzliche Verbindungsmittel (22, 23) aufweisen, die längs eines Teils des Umfangs angeordnet sind, um bei Auslieferung ab Werk eine Vormontage des Deckels (12) an zwei oder drei Abschnitten zu ermöglichen, derart daß der Endanwender anschließend den Deckel (12) ohne Zuhilfenahme eines Werkzeugs von Hand lösen kann.

2. Gehäuse nach Anspruch 1, dadurch gekennzeichnet, daß das Band durch Ultraschallschweißen mit dem Unterteil und dem Deckel verbunden ist.

3. Gehäuse nach Anspruch 1, dadurch gekennzeichnet, daß das Band durch Hochfrequenzschweißen mit dem Unterteil und dem Deckel verbunden ist.

4. Gehäuse nach Anspruch 1, dadurch gekennzeichnet, daß die Befestigung des Bands am Unterteil und am Deckel durch Ineinanderschnappen von, an den Enden des Bands sowie in geeigneten Abschnitten des Deckels (12) und des Unterteils (11) ausgebildeten formangepaßten Mitteln erfolgt.

5. Gehäuse nach Anspruch 1, dadurch gekennzeichnet, daß das Band durch Warmnietung mit dem Unterteil und dem Deckel verbunden ist.

## Claims

1. A case for a sealed extension box, comprising a body and a cover formed by two distinct elements able to be clipped to one another, and a flexible link (13) joining the body (11) permanently to the cover (12), characterized in that the flexible link (13) is formed by a foil sheet made of synthetic material one end of which is secured to the body (11) and the other end of which is secured to the cover (12), and that the body (11) and cover (12) are equipped with complementary assembly means (22, 23) extending along a part of the periphery to allow pre-assembly of the cover (12) in two or three zones when packaging in the plant, manual disassembly of the cover (12) by the final user being able to be performed subsequently without any tool.

2. The case according to claim 1, characterized in that the foil sheet is fixed to the body and to the cover by ultrasound welding.

3. The case according to claim 1, characterized in that the foil sheet is fixed to the body and to the cover by high frequency welding.

4. The case according to claim 1, characterized in that the foil sheet is fixed to the body and to the cover by clipping of elements of complementary shape respectively equipping the ends of the foil sheets and adequate zones of the cover (12) and of the body (11).

5. The case according to claim 1, characterized in that the foil sheet is fixed to the body (11) and to the cover (12) by hot die riveting.
